(19) Europäisches Patentamt / European Patent Office / Office européen des brevets

(11) **EP 4 247 859 B1**

(12) **EUROPEAN PATENT SPECIFICATION**

(45) Date of publication and mention
of the grant of the patent:
**25.03.2026 Bulletin 2026/13**

(21) Application number: **21844080.8**

(22) Date of filing: **15.11.2021**

(51) International Patent Classification (IPC):
*C08F 2/38* (2006.01)   *C08F 220/10* (2006.01)
*C08F 220/18* (2006.01)   *C08L 33/04* (2006.01)
*C08L 51/04* (2006.01)   *C08F 2/26* (2006.01)

(52) Cooperative Patent Classification (CPC):
(C-Sets available)
**C08F 2/38; C08F 220/1804; C08L 51/04; C08F 2/26**
(Cont.)

(86) International application number:
**PCT/US2021/059311**

(87) International publication number:
**WO 2022/108860 (27.05.2022 Gazette 2022/21)**

(54) **POWDER COMPOSITION OF MULTILAYER POLYMER AND OLIGOMERIC COAGULATION AND DISPERSION AID**

PULVERZUSAMMENSETZUNG AUS MEHRSCHICHTIGEM POLYMER UND OLIGOMEREM KOAGULATIONS- UND DISPERSIONSHILFSMITTEL

COMPOSITION DE POUDRE DE POLYMÈRE MULTICOUCHE ET AIDE À LA COAGULATION ET À LA DISPERSION OLIGOMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2020 US 202063115218 P**

(43) Date of publication of application:
**27.09.2023 Bulletin 2023/39**

(73) Proprietor: **Rohm and Haas Company**
**Collegeville, PA 19426 (US)**

(72) Inventors:
• **LUO, Pu**
**Collegeville, PA 19426 (US)**
• **ROHRBACH, William**
**Collegeville, PA 19426 (US)**
• **WILLS, Morris**
**Collegeville, PA 19426 (US)**
• **BROWN, Steven, C.**
**Collegeville, PA 19426 (US)**

(74) Representative: **Beck Greener LLP**
**Fulwood House**
**12 Fulwood Place**
**London WC1V 6HR (GB)**

(56) References cited:
WO-A1-2020/180435   WO-A1-2020/197797
WO-A1-2020/263495   US-A- 4 474 855
US-A1- 2018 002 563

**(Cont. next page)**

(52) Cooperative Patent Classification (CPC): (Cont.)

C-Sets
**C08F 220/1804, C08F 220/14;**
**C08L 51/04, C08L 33/12**

**Description**

FIELD OF THE INVENTION

The present invention generally relates to a powder composition and, more specifically, to a composition for dispersing multilayer polymers.

DESCRIPTION OF THE RELATED ART

Multilayer (e.g., core-shell) polymers or rubbers are a commonly used plastic additive used to improve the properties of compositions, such as, (meth) acrylic resins (e.g., methyl methacrylate (MMA)) and epoxy resins. Without an additive, such resins are often too brittle to be of use. For example, acrylic multilayer polymers and methacrylate butadiene styrene (MBS) core-shell polymers are often added to resins to substantially improve the impact strength of plastic compositions.

Due to ease of handling and processing, multilayer polymers are typically supplied and added to compositions in the form of a powder. These powdered multilayer polymers can be prepared by conventional emulsion polymerization and isolated to powders by spray drying or coagulation to produce the desired powder size. When added to plastic compositions, these agglomerated multilayer polymers are intended to disperse throughout the plastic composition. However, the powdered multilayer polymers do not often disperse as desired and have a high dispersion viscosity.

Attempts to improve the dispersion of multilayer polymers in the resin compositions have been made. For MBS core-shell polymers, one approach is to increase the level of the shell, i.e., increase the ratio of the shell with respect to the core, which is made mostly from MMA. While increasing the MMA shell levels improves dispersibility, a higher coagulation temperature also results from the higher MMA shell levels.

The use of certain multilayer polymers alone, including MBS core-shell polymers, especially ones made with high MMA shell levels, can also lead to high coagulation temperatures. High coagulation temperatures result in higher energy costs and increased cycle times for preparing the compositions.

WO 2017/121749 discloses a liquid composition comprising a (meth)acrylic polymer, a multi-stage polymer, and a monomer where the (meth)acrylic polymer has a mass average molecular weight, Mw, of less than 100,000 g/mol. The (meth)acrylic polymer comprises essentially polymers comprising (meth) acrylic monomers that make up 50 wt% or more of the (meth) acrylic polymer.

WO 2020/197797 A1 discloses powder compositions comprising a multistage polymer and a composition for dispersing core shell particles as well as mixtures of the powder composition with another resin.

There is a need for an additive that can provide good dispersibility while lowering the coagulation temperature. The present invention seeks to address one or more of these problems.

BRIEF SUMMARY OF THE INVENTION

The present disclosure provides a composition for dispersing core shell particles, the composition comprising an oligomer prepared from at least one alkyl (meth)acrylate monomer in the presence of a chain transfer agent, wherein the oligomer has a number average molecular weight of less than 10,000 g/mol and a glass transition temperature, $T_g$, as measured by differential scanning calorimetry (DSC), less than a coagulation temperature of a composition comprising the oligomer and a multilayer polymer, wherein the coagulation temperature is based on an average particle diameter of 200 microns.

The present invention relates to a powder composition comprising a multilayer polymer comprising a methacrylate butadiene styrene core shell polymer and an oligomer prepared from at least one alkyl (meth)acrylate monomer in the presence of a chain transfer agent, wherein the oligomer has a number average molecular weight of less than 10,000 g/mol and a $T_g$, as measured by DSC, less than a coagulation temperature of a composition comprising the oligomer and the multilayer polymer, wherein the coagulation temperature is based on an average particle diameter of 200 microns.

DETAILED DESCRIPTION OF THE INVENTION

The present disclosure provides a composition for dispersing multilayer polymers. The present inventors have unexpectedly discovered that an oligomer additive can result in the significant improvement in the dispersion of multilayer polymers in resins, such as epoxy and alkyl (meth)acrylate monomers, such as methyl methacrylate. Additionally, the oligomer additive can provide significant improvements in the coagulation temperature of a composition comprising the oligomer additive and a multilayer polymer.

One aspect of the present disclosure relates to a composition for dispersing multilayer polymers comprising an oligomer.

As used herein, an "oligomer" is distinguished from a polymer in that an oligomer has relatively few monomeric units and has minimal, if any, chain entanglements due to its shorter length. Polymers exhibit polymer-like properties, such as film and fiber forming, and the addition or removal of one or a few of the units has a negligible effect on the properties. Quantitatively, an oligomer according to the present invention has a number average molecular weight of less than 10,000 g/mol. This definition is consistent with the definition provided by Naka K. (2014) Monomers, Oligomers, Polymers, and Macromolecules (Overview). In: Kobayashi S., Müllen K. (eds) Encyclopedia of Polymeric Nanomaterials. Springer, Berlin, Heidelberg. https://doi.org/10.1007/978-3-642-36199-9_237-1, which defines a polymer as having a molecular weight greater than 10,000 g/mol.

Preferably, the oligomer has a number average molecular weight, $M_n$, less than 9,000 g/mol, such as, for example, less than 8,000 g/mol, less than 7,000 g/mol, less than 6,000 g/mol, less than 5,000 g/mol, less than 4,000 g/mol, less than 3,000 g/mol, less than 2,500 g/mol, or less than 2,000 g/mol. Size Exclusion Chromatography (SEC) with refractive index (RI) detection in THF was used to determine molecular weight distribution of oligomers. Poly(methyl methacrylate) (PMMA) standards were used to determine relative molecular weight data of oligomers. Samples were prepared in duplicate by diluting the samples into THF at a concentration of around 2 mg/ml. The sample-solvent mixtures were shaken on a mechanical shaker for 2 hours at room temperature, rested overnight, and then filtered using a 0.45 $\mu$m PTFE filter prior to the GPC analysis. SEC separations were carried out on an Agilent 1260 Infinity II Model (in RTG-CV) consisting of an isocratic pump, multicolumn thermostat, integrated degasser, auto sampler, and refractive index detector. Agilent GPC/SEC software Version A.02.01 ; Build 9.34851 were used to process the data. The Gel permeation chromatography (GPC) separation was performed in THF at a flow rate of 1 mL/min using a GPC column set composed of two PLgel columns Mixed D columns (300x7.5mm ID) and a guard column in series (particle size 5 $\mu$m). The sample injection volume was 100 $\mu$L.

The oligomer is prepared from at least one alkyl (meth)acrylate monomer in the presence of a chain transfer agent. The oligomer can be prepared, for example, by emulsion polymerization of the monomers in the presence of the chain transfer agent.

The oligomer has a glass transition temperature, $T_g$, as measured by differential scanning calorimetry (DSC) at 10 °C/min less than a coagulation temperature of a composition comprising the oligomer and a multilayer polymer, wherein the coagulation temperature is based on an average particle diameter of 200 microns. As used herein, the "coagulation temperature" is the temperature where a composition comprising the oligomer and a multilayer polymer is coagulated, resulting in a coagulate that has an average particle diameter of 200 microns. As used herein the phrase "average particle diameter" or "average particle size" is the arithmetic mean of all possible diameters, where a diameter is any linear dimension passing through the center of the particle. The particle size of the oligomers were measured on a Malvern Zetasizer Nano S90 particle size analyzer. The coagulation temperature can be interpolated or extrapolated for an average particle diameter of 200 microns by measuring the coagulation temperature of different sized particles.

Preferably, a composition comprising a multilayer polymer and an oligomer of the present invention results in a coagulation temperature of less than 80°C, more preferably less than 75°C, and even more preferably less than 70°C. Oligomers of the present invention lower the coagulation temperature. Without wishing to be bound by theory, it is believed that the oligomer acts as an adhesive to bind the core-shell polymer into powder grains, thus enabling a harder shell and increased shell thickness on the core-shell polymer, which also tends to favor dispersion when added to a resin composition. Without the oligomer, increases in the ratio of the shell relative to the core are limited by the coagulation temperature.

The $T_g$ of the oligomer is less than the coagulation temperature. Preferably, the $T_g$ is at least 5°C less than the coagulation temperature, such as, for example, at least 7.5°C less than the coagulation temperature, at least 10°C less than the coagulation temperature, at least 15°C less than the coagulation temperature, at least 20°C less than the coagulation temperature, at least 25°C less than the coagulation temperature, at least 30°C less than the coagulation temperature, at least 35°C less than the coagulation temperature, at least 40°C less than the coagulation temperature, at least 45°C less than the coagulation temperature, or at least 50°C less than the coagulation temperature. Preferably, the $T_g$ of the oligomer, as measured by DSC, is less than 70°C, less than 65°C, less than 60°C, less than 55°C, less than 50°C, less than 45°C, less than 40°C, less than 35°C, less than 30°C, less than 25°C, less than 20°C, less than 15°C, less than 10°C, less than 5°C, less than 0°C, less than -5°C, or less than -10°C.

The alkyl (meth)acrylate monomer may be selected to provide the glass transition temperature. Due to the low molecular weight of the oligomers according to the present invention, the $T_g$ of the oligomer, as measured by DSC, can vary significantly from the $T_g$ calculated with the Fox equation [Bulletin of the American Physical Society 1 , 3 Page 123 (1956)]. The Fox equation calculates the $T_g$ as follows:

$$\frac{1}{T_g} = \frac{w_1}{T_{g(1)}} + \frac{w_2}{T_{g(2)}}$$

In the Fox equation, $w_1$ and $w_2$ refer to the weight fraction of the two comonomers, based on weight of monomers charged to the reaction vessel, and $T_{g(1)}$ and $T_{g(2)}$ refer to the glass transition temperatures of the two corresponding homopolymers in degrees Kelvin. When three or more monomers are present, additional terms are added ($w_n/T_{g(n)}$). The glass transition temperatures of homopolymers for the purposes of this invention are those reported in "Polymer Handbook", edited by J. Brandrup and E. H. Immergut, Interscience Publishers, 1966, unless that publication does not report the Tg of a particular homopolymer, in which case the Tg of the homopolymer is measured by DSC.

The at least one alkyl (meth)acrylate monomer is selected to provide a $T_g$, as measured by DSC, less than the coagulation temperature of a composition comprising an oligomer of the at least one alkyl (meth)acrylate monomer and a multilayer polymer. For example, the alkyl (meth)acrylate monomer may be selected from a single monomer, such as, for example, ethyl acrylate, ethyl hexyl acrylate, or butyl acrylate, which provides an oligomer having a very low $T_g$ (e.g., a $T_g$ less than -10°C) as measured by DSC. Alternatively, the at least one alkyl (meth)acrylate may comprise two or more alkyl (meth)acrylate monomers. For example, the at least one alkyl (meth)acrylate monomers may be selected from a monomer that provides a relatively low $T_g$ and a monomer that provides a relatively high $T_g$ so long as the $T_g$ of the resulting oligomer is less than $T_g$ of the coagulation temperature of a composition comprising the oligomer and a multilayer polymer. An example of such a monomer would be an oligomer formed from butyl acrylate and methyl methacrylate. On its own, an oligomer formed from methyl methacrylate monomers alone would result in an oligomer having a relatively high $T_g$ when measured by DSC. However, when used in combination with butyl acrylate, the $T_g$ of the resulting oligomer can be lowered to achieve a $T_g$ less than the coagulation temperature of a composition comprising the oligomer and a multilayer polymer.

Alkyl (meth)acrylate monomers that may be used in the preparation of the oligomer include, but are not limited to ethyl (meth)acrylate, ethyl hexyl (meth)acrylate, methyl (meth)acrylate, glycidyl methacrylate, butyl (meth)acrylate, lauryl (meth)acrylate, poly(ethylene glycol) methacrylate, and 1,3-butylene glycol dimethacrylate. As used herein, "alkyl (meth) acrylate" refers to both the alkyl acrylate and the alkyl methacrylate.

In addition to the at least one alkyl (meth)acrylate monomer, additional monomers may also be used to prepare the oligomer. For example, the oligomer may be prepared from at least one alkyl (meth)acrylate monomer and an additional monomer. The additional monomer may be selected from, for example, styrene monomers and acrylamide monomers, such as, for example, dimethyl acrylamide and diacetone acrylamide.

The degree of polymerization of the oligomer is less than 100. Preferably, the degree of polymerization is less than 75. More preferably, the degree of polymerization is less than 50 or less than 40. As used herein, the degree of polymerization is calculated based on the molar ratio of chain transfer agent to monomers in the reaction mixture, assuming 1 terminal chain transfer agent residue per chain.

The chain transfer agent (CTA) may be any compound known or found to be useful as a chain transfer agent in polymerization of acrylate or methacrylate monomers. For example, thiol chain transfer agents can be used. Examples of such thiol CTAs include, but are not limited to, propyl mercaptan, butyl mercaptan, methyl mercaptan, hexyl mercaptan, octyl mercaptan, dodecyl mercaptan, tetra-thiol thioglycollic acid, mercaptopropionic acid, alkyl thioglycollates e.g., 2-ethyl hexyl thioglycollate (EHTG) or octylthioglycollate, mercaptoethanol, mercaptoundecanoic acid, thiolactic acid, thiobutyric acid, trimethylol propane tris(3-mercaptopropionate), pentaerythritol tetra(3-mercaptopropionate), pentaerythritol tetrathioglycollate, pentaerythritol tetrathiolactate, pentaerythritol tetrathiobutyrate; methyl 3-mercaptopropionate (MMP), butyl 3-mercaptopropionate (BMP), pentaerythritol tetrakis(3-mercaptopropionate) (PETMP), dipentaerythritol hexa(3-mercaptopropionate), dipentaerythritol hexathioglycollate; tripentaerythritol octa(3-mercaptopropionate), and tripentaerythritol octathioglycollate. The use of polyfunctional thiols is a useful way to increase the degree of branching in the polymer. Optionally, the chain transfer agent may comprise a mixture of more than one type of compound. Preferably, the CTA comprises MMP, **BMP,** PETMP, EHTG, or a mixture thereof. More preferably, the CTA comprises BMP or a mixture thereof.

The oligomer may be prepared by any known method. Preferably, the oligomer is prepared by emulsion polymerization.

One aspect of the present invention relates to a composition comprising a multilayer polymer comprising a methacrylate butadiene styrene core shell polymer. The composition comprising the multilayer polymer and the oligomer is coagulated and dried to form a powder.

The multilayer polymer comprises a MBS core-shell polymer. Also disclosed acrylic core-shell polymers may include, for example, an acrylic core-shell polymer having a core comprising butyl acrylate and a shell comprising methyl methacrylate, and optionally, one or more intermediate layers between the core and the shell. The MBS core-shell polymer may comprise, for example, a crosslinked butadiene core covered with a grafted and optionally crosslinked methyl methacrylate shell. The MBS core-shell polymer may optionally comprise an intermediate layer between the core and the shell, where the intermediate layer is a highly crosslinked layer between the core and the shell, e.g., a layer made from methyl methacrylate monomers and 1,3-butylene glycol dimethacrylate monomers. The composition can be prepared by blending an emulsion of the oligomer and an emulsion containing the multilayer polymer, or the oligomer can be synthesized *in situ* in the presence of a multilayer polymer emulsion prior to coagulation.

The composition may be prepared by cold blending the oligomer emulsion with a core-shell polymer emulsion prior to coagulation. The resulting mixture can then be isolated and dried to form a powder comprising the core-shell polymer and the oligomer.

The oligomer may be present in the powder composition in an amount ranging from 1 to 98 wt% relative to the total weight of the powder composition. Preferably, the oligomer is present in the powder composition in an amount of at least 2 wt%, at least 3 wt%, at least 4 wt%, or at least 5 wt% relative to the total weight of the powder composition. Preferably, the oligomer is present in an amount less than 80 wt%, less than 60 wt%, less than 50 wt%, less than 40 wt%, less than 30 wt%, or less than 20 wt%.

The powder preferably has an average particle diameter ranging from 50 to 500 microns. More preferably, the powder has an average particle diameter ranging from 75 to 400 microns, such as, from 100 to 300 microns. Even more preferably, the powder has an average particle diameter ranging from 150 to 250 microns As used herein the phrase "average particle diameter" is the arithmetic mean of all possible diameters, where a diameter is any linear dimension passing through the center of the particle.

The oligomer of the present invention may also result in significant reduction in the viscosity when used in liquid resin compositions, such as epoxy and methyl methacrylate resins.

Another aspect of the present invention relates to resin compositions comprising or prepared from the powder compositions according to the present invention. For example, the resin composition may comprise an epoxy resin or a methyl methacrylate resin which is blended with the powder of the present invention, which comprises a multilayer polymer, such as, for example, a MBS or acrylic core-shell polymer, and an oligomer additive.

The powder comprising the multilayer polymer and the oligomer additive may be added to the resin composition in an amount ranging from 2 to 30 wt% relative to the total weight of the resin composition, preferably from 5 to 25 wt% relative to the total weight of the resin composition. The oligomer additive may be present in the resin composition in an amount ranging from 0.5 to 10 wt%, such as, for example, from 2 to 8 wt%, or from 4 to 6 wt% relative to the total weight of the resin composition.

Alternatively, the powder composition of the multilayer polymer and the oligomer additive may be combined with another powder comprising a multilayer polymer and no oligomer additive. For example, the powder composition comprising the multilayer polymer and the oligomer additive may comprise a relatively higher amount of the oligomer additive that is blended with another powder to adjust the total amount of oligomer additive in the resulting resin composition. The proportions of the oligomer additive present in the powder composition can therefore be higher and adjusted through the use of a second powder that does not comprise the oligomer additive.

The present invention further relates to a process for improving the dispersion of a multilayer polymer comprising adding a powder composition comprising the multilayer polymer and the oligomer additive to a resin composition, where the dispersion of the multilayer polymer is improved compared to a similar composition made with a powder composition that does not comprise the oligomer additive.

Examples

Oligomers according to the present invention were prepared by conventional emulsion polymerization based on the formulations in Table 1. The oligomers had a very low $T_g$. Oligomer 1 was formed by the following process. To a 5 liter, 4-necked round bottomed flask equipped with a mechanical stirrer, thermometer, condenser, and electric heating mantel, was charged 1497.02 g of deionized water, 0.094 g of Sequestrene and 10.27 g of a 28% aqueous solution of sodium lauryl sulfate surfactant. The reactor contents were heated to 80 °C. In a separate container 125 g of butyl 3-mercaptopropionate, 112.5 g of methyl methacrylate, 1012.5 g of butyl acrylate, 56.70 g of a 28% aqueous solution of sodium lauryl sulfate, and 275.65 g of deionized water were blended and agitated to form a monomer emulsion mixture. 79.12 g of the monomer emulsion mixture was added to the reactor, followed by simultaneous feeds of 100 g of 2.5% aqueous solution of t-butyl hydroperoxide and 100g of 2.5% aqueous solution of sodium formaldehyde sulfoxylate at flow rates of 1.11 g/minute, respectively. After 15 minutes, the rest of the monomer emulsion mixture was added at a flow rate of 33.41 g/minute. At the end of the feeds the reactor was cooled to 40 °C and filtered, and no coagulum was observed. The polymer solids content was measured to be 38.2% and the emulsion latex particle size was measured to be 105 nm.

Table 1

| Oligomer ID | Weight % | | | Target | | Measured $M_n$ |
|---|---|---|---|---|---|---|
| | BA | MMA | BMP | DP | $M_n$ | |
| Olig. 1 | 81.0 | 9.0 | 10.0 | 12 | 1623 | 1500 ± 100 |
| Olig. 2 | 83.25 | 9.25 | 7.5 | 21 | 2163 | 1800 ± 100 |
| Olig. 3 | 85.5 | 9.5 | 5.0 | 31 | 3245 | 2100 ± 100 |

The oligomer emulsions produced in accordance with Table 1 were cold blended with an MBS core-shell polymer emulsion, isolated, and dried to form a powder. The MBS core-shell polymer comprised 72 wt% butadiene core and a 28 wt% methyl methacrylate shell where the weight percentages are based on the total weight of the MBS core-shell polymer. To prepare the MBS core-shell polymer, a stainless steel autoclave with an agitator and several entry ports was charged 6300 parts of deionized water, 170 parts of a 60 nm polymer preform and 4 parts of potassium oleate. After evacuating the reactor, 3200 parts of butadiene, 4 parts of divinylbenzene, 37 parts of diisopropylbenzene hydroperoxide, 11 parts of sodium formaldehyde sulfoxylate and 30 additional parts of potassium oleate were added and the mixture was allowed to react at 65 °C until there was no longer a drop in pressure. The reaction vessel was then vented to remove any remaining volatile material.

To 2000 parts of the rubber latex having approximately 34% solids, as prepared above, were added 0.59 parts of sodium formaldehyde sulfoxylate dissolved in 10 parts of deionized water and 0.51 parts of 70% active strength tert-butyl hydroperoxide in 6 parts of deionized water, followed a monomer mixture of 181 parts of methyl methacrylate, 3.8 parts of styrene, 3.2 parts of divinyl benzene over 1 hour. After the end of the monomer mixture feed, 0.3 parts of sodium formaldehyde sulfoxylate dissolved in 5 parts of deionized water and 0.25 parts of 70% active strength tert-butyl hydroperoxide in 3 parts of deionized water were added, followed by a monomer mixture of 46.9 g MMA and 11.7 g BA over 20 minutes. 5 minutes after the completion of the feeds, 0.3 parts of sodium formaldehyde sulfoxylate dissolved in 5 parts of deionized water and 0.25 parts of 70% active strength tert-butyl hydroperoxide in 3 parts of deionized water were added. 30 minutes after the end of the feeds, 0.36 parts of sodium formaldehyde sulfoxylate dissolved in 72 parts of deionized water and 0.3 parts of 70% active strength tert-butyl hydroperoxide dissolved in 42 parts of deionized water were added over 180 minutes and caused to react to completion. The resulting multistage polymer latex had approximately 38% solids.

To prepare Coagulation 1, to a quart size flask were added 25.4 g of the oligomer 1 emulsion with solid content of 41.8%, 534.6 g MBS core shell polymer emulsion with solid content of 37.4%, followed by 139 g deionized water. The mixture was heated to 63 °C.

An antioxidation emulsion preparation was prepared by adding 4.51 g potassium oleate, 2.45 g BNX® DLTDP, 2.45 g butylated hydroxytoluene, 0.6 g Irganox 245, and 16.8 g deionized water to a 250 ml plastic container. The mixture was homogenized at 10000 rpm for 10 minutes.

To coagulate the composition, 3.6g of 3% hydrochloric acid aqueous solution, 0.67g of 0.05% calcium chloride aqueous solution, and 1309.1 g deionized water were added to a 3 liter beaker. The beaker content was heated to 63 °C under agitation at 500 rpm. When the content reached 63 °C, the preheated emulsion above was added slowly over 30-45 seconds to the beaker. This caused phase separation of the mixture into a water phase and a solid polymer phase. 70.7 g of 3% hydrochloric acid aqueous solution was added to complete the coagulation. The contents of the beaker were then neutralized to pH of 7.0 using 63 g of 5% sodium hydroxide aqueous solution. The mixture was then heated to 90 °C, and held at 90 °C for 30 minutes. After the hold, the mixture was cooled, dewatered, and washed in a Büchner funnel. The samples were washed with deionized water until the filtrate conductivity is below 30 $\mu$S/m, and then dewatered. The samples were dried in a vacuum oven for overnight at 40 °C. The particle size of the powder was measured on a Malvern Mastersizer 2000.

The oligomer was added in an amount of 5 wt% relative to the total weight of MBS core-shell polymer and the oligomer. As shown in Table 2, the addition of the oligomer significantly decreased the coagulation temperature of the composition.

Table 2

| Sample | MBS (wt%) | Oligomer (wt%) | Coagulation Temp.* | Particle Size ($\mu$m) | Coagulation Temp. Extrapolated to 200 $\mu$m particle size |
|---|---|---|---|---|---|
| Control 1 | 100% | 0% | 73°C | 221 | 72.1°C |
| Coag. 1 | 95% | 5% **Olig. 1** | 63°C | 233 | 61.8°C |
| Coag. 2 | 95% | 5% Olig. 2 | 63°C | 199 | 63°C |
| Coag. 3 | 95% | 5% Olig. 3 | 63°C | 179 | 63.8°C |
| *Coagulation temperature for the actual particle size produced. | | | | | |

To test the dispersibility of the coagulated MBS core-shell/oligomer, the coagulated composition was added to either an epoxy resin (D.E.R.™-331 epoxy resin available from Olin Corporation) or methyl methacrylate monomers.

To prepare MMA dispersions, 12 g of polymer was slowly added to a mixing cup containing 38 g of methyl methacrylate at room temperature. The resulting mixture was hand mixed with a spatula, then agitated with a mixer at 1600 rpm for 60 seconds. The resulting dispersion was spread down on a Leneta chart for visual inspection of dispersion quality. The dispersion viscosity was measured on a Brookfield model DV-I + viscometer at shear rate of 5 rpm.

To prepare the epoxy dispersions, a resin kettle containing 249 g D.E.R. 331 epoxy resin was heated to 60°C. With an agitation rate of 1800 rpm, 51 g polymer powder was added to the kettle. The kettle content was agitated for 90 min and then cooled down to room temperature. The resulting dispersion were spread down for visual inspection of dispersion quality. The dispersion viscosity was measured on a Brookfield model DV-II viscometer at shear rate of 0.3 rpm at room temperature.

Table 3

| Sample | Resin (wt%) | Powder (wt%) | Observations | Viscosity (cP @ 0.3 rpm) |
|---|---|---|---|---|
| Comp. Ex. 1 | 83% Epoxy | 17% Control 1 | Gritty | 240000 |
| Ex. 1 | 83% Epoxy | 17% Coag. 1 | No grit | 68000 |
| Ex. 2 | 83% Epoxy | 17% Coag. 2 | No grit | 64000 |
| Ex. 3 | 83% Epoxy | 17% Coag. 3 | No grit | 63000 |
| Comp. Ex. 2 | 75% MMA | 25% Control | No grit | 210000 |
| Ex. 4 | 75% MMA | 25% Coag. 1 | No grit | 20000 |
| Ex. 5 | 75% MMA | 25% Coag. 2 | No grit | 105000 |
| Ex. 6 | 75% MMA | 25% Coag. 3 | No grit | 20000 |

In each of the examples incorporating an oligomer according to the present invention, the final composition had a significantly improved viscosity and appearance. The dispersion of Comparative Example 1 was poor and the sample had undispersed grit and a high viscosity. The examples according to the present invention exhibited excellent dispersion with no grit, had low viscosity, as well as the lowered coagulation temperature in the formation of the MBS latex.

Another set of experiments were performed to determine the effect of the composition of the oligomer. A series of oligomers was prepared according to Table 4. These oligomers were prepared in the same manner as those described above in Table 1.

Table 4

| Oligomer ID | Weight % | | | | Target | |
|---|---|---|---|---|---|---|
| | BA | BMA | MMA | BMP | DP | $M_n$* |
| Olig. 4 | 90% | 0% | 0% | 10% | 12.4 | 1623 |
| Olig. 5 | 0% | 90% | 0% | 10% | 11.3 | 1623 |
| Olig. 6 | 0% | 75% | 15% | 10% | 12.0 | 1623 |
| Olig. 7 | 0% | 60% | 30% | 10% | 12.7 | 1623 |
| Olig. 8 | 0% | 45% | 45% | 10% | 13.4 | 1623 |
| Olig. 9 | 0% | 30% | 60% | 10% | 14.1 | 1623 |
| Olig. 10 | 0% | 15% | 30% | 10% | 14.9 | 1623 |
| Olig. 11 | 0% | 0% | 90% | 10% | 15.6 | 1623 |
| *The measured $M_n$ was within +/- 10% of the target $M_n$. | | | | | | |

Table 5 shows the glass transition temperature calculated with the Fox equation and the experimentally determined glass transition temperature using DSC, as well as the difference between the calculated $T_g$ and the measured $T_g$ (Fox - DSC). The substantial difference between the calculated $T_g$ and the measured $T_g$ is indicative of the oligomeric nature of the additive.

Table 5

| Oligomer ID | Fox Tg (°C) | DSC Tg (°C) Replicates | | DSC (°C) Average | Fox - DSC (°C) |
|---|---|---|---|---|---|
| Olig. 4 | -50 | -69 | -68 | -69 | 19 |
| Olig. 5 | 20 | -39 | -32 | -36 | 56 |
| Olig. 6 | 31 | -24 | -26 | -25 | 56 |
| Olig. 7 | 44 | -10 | -8 | -9 | 53 |
| Olig. 8 | 57 | 2 | 3 | 3 | 55 |
| Olig. 9 | 72 | 15 | 18 | 17 | 56 |
| Olig. 10 | 88 | 21 | 27 | 24 | 64 |
| Olig. 11 | 105 | 44 | 43 | 44 | 62 |

The oligomers Olig. 4 to 11, produced in accordance with Table 4, were cold blended with an MBS core-shell polymer emulsion, isolated, and dried to form a powder. The MBS core-shell polymer comprised 77 wt% butadiene core and a 23 wt% methyl methacrylate shell, where the weight percentages are based on the total weight of the MBS core-shell polymer. The oligomer was added in an amount of 5 wt% relative to the total weight of MBS core-shell polymer and the oligomer. As shown in Table 6, the addition of the oligomer significantly decreased the coagulation temperature of the composition.

Table 6

| Sample | MBS (wt%) | Oligomer (wt%) | Particle Size ($\mu$m)* | Coagulation Temp. Extrapolated to 200 $\mu$m particle size |
|---|---|---|---|---|
| Control 2 | 100% | 0% | 222 | 55.2°C |
| Coag. 4 | 95% | 5% Olig. 4 | 197 | 50.1°C |
| Coag. 5 | 95% | 5% Olig. 5 | 173 | 51.1°C |
| Coag. 6 | 95% | 5% Olig. 6 | 205 | 45.8°C |
| Coag. 7 | 95% | 5% Olig. 7 | 555 | 41.3°C |
| Coag. 8 | 95% | 5% Olig. 8 | 353 | 43.4°C |
| Coag. 9 | 95% | 5% Olig. 9 | 293 | 47.0°C |
| Coag. 10 | 95% | 5% Olig. 10 | 380 | 44.8°C |
| Coag. 11 | 95% | 5% Olig. 11 | 317 | 46.3°C |
| *Particle size is measurement of actual average particle diameter of particles formed. | | | | |

The coagulated powders, Coag. 4 to 11, at a concentration of 17 wt% relative to the total weight of the composition, were dispersed in epoxy (D.E.R.™-331 epoxy resin) and the observations are reported in Table 7.

Table 7

| Sample | Epoxy (wt%) | Powder (wt%) | Dispersion Observations |
|---|---|---|---|
| Comp. Ex. 3 | 83% | 17% Control 2 | Poor |
| Ex. 7 | 83% | 17% Coag. 4 | Excellent |
| Ex. 8 | 83% | 17% Coag. 5 | Excellent |
| Ex. 9 | 83% | 17% Coag. 6 | Excellent |
| Ex. 10 | 83% | 17% Coag. 7 | Excellent |
| Ex. 11 | 83% | 17% Coag. 8 | Excellent |
| Ex. 12 | 83% | 17% Coag. 9 | Excellent |
| Ex. 13 | 83% | 17% Coag. 10 | Excellent |

(continued)

| Sample | Epoxy (wt%) | Powder (wt%) | Dispersion Observations |
|--------|-------------|--------------|-------------------------|
| Ex. 14 | 83% | 17% Coag. 11 | Excellent |

As seen in Tables 6 and 7, the oligomers according to the present invention provided both an improved dispersion and a reduced coagulation temperature.

Another series of experiments were performed to study the effect of the molecular weight of the oligomer by varying the amount of CTA used to prepare the oligomer. A series of oligomers was prepared according to Table 8. These oligomers were prepared in the same manner as those described above in Table 1.

Table 8

| Oligomer ID | Weight % | | | Target | |
|-------------|------|------|------|------|------------|
| | BA | MMA | BMP | DP | $M_n$* |
| Olig. 12 | 81.0% | 9.0% | 10% | 12.4 | 1623 |
| Olig. 13 | 86.4% | 9.6% | 4.0% | 11.3 | 5050 |
| Olig. 14 | 87.3% | 9.7% | 3.0% | 12.0 | 6733 |
| Olig. 15 | 88.2% | 9.8% | 2.0% | 12.7 | 10,100 |
| *The measured $M_n$ was within +/- 10% of the target $M_n$. | | | | | |

The oligomer emulsions produced in accordance with Table 8 were cold blended with an MBS core-shell polymer emulsion, isolated, and dried to form a powder. The MBS core-shell polymer comprised 72 wt% butadiene core and a 28 wt% methyl methacrylate shell where the weight percentages are based on the total weight of the MBS core-shell polymer. The MBS core-shell polymer used to prepare the compositions of Control 3 and Coag. 12 to 15 was a different preparation than that used to prepare the compositions of Control 1 and Coag. 1 to 3, thus resulting in a different coagulation temperature for the control sample. The oligomer was added in an amount of 5 wt% relative to the total weight of MBS core-shell polymer and the oligomer. As shown in Table 9, the addition of the oligomer significantly decreased the coagulation temperature of the composition.

Table 9

| Sample | MBS (wt%) | Oligomer (wt%) | Coagulation Temp.* | Particle Size (μm)** | Coagulation Temp. Extrapolated to 200 μm particle size |
|--------|-----------|----------------|--------------------|----------------------|----------------------------------------------------------|
| Control 3 | 100% | 0% | 68°C | 227 | 67.0°C |
| Coag. 12 | 95% | 5% Olig. 12 | 62°C*** | 256*** | 63.5°C |
| Coag. 13 | 95% | 5% Olig. 13 | 62.8°C | 181 | 64.4°C |
| Coag. 14 | 95% | 5% Olig. 14 | 63.3°C | 173 | 63.2°C |
| Coag. 15 | 95% | 5% Olig. 15 | 64°C | 223 | 64.2°C |
| *Coagulation temperature for the actual particle size produced. **Particle size is measurement of actual average particle diameter of particles formed. ***Average of two samples. | | | | | |

Unless otherwise indicated by the context of the specification, all amounts, ratios and percentages are by weight, and all test methods are current as of the filing date of this disclosure. The articles "a", "an" and "the" each refer to one or more.

Further, any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9 and may be relied upon individually and/or collectively and provide adequate support for specific embodiments. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments. Finally, an individual number within a disclosed range may be relied upon and provides adequate support for specific embodiments. For example, a range "of from 1 to 9" includes various individual integers, such as 3, as well as individual numbers including a decimal point (or fraction), such as 4.1, which may be relied upon and provide adequate support for specific embodiments.

The term "composition," as used herein, includes material(s) which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

## Claims

1. A powder composition comprising

   (i) a multilayer polymer comprising a methacrylate butadiene styrene core shell polymer; and
   (ii) a composition for dispersing core shell particles,

   said composition for dispersing core shell particles comprising:
   an oligomer prepared from at least one alkyl (meth)acrylate monomer in the presence of a chain transfer agent, wherein the oligomer has a number average molecular weight of less than 10,000 g/mol and a glass transition temperature, $T_g$, as measured by differential scanning calorimetry, less than a coagulation temperature of a composition comprising the oligomer and a multilayer polymer comprising a methacrylate butadiene styrene core shell polymer, wherein the coagulation temperature is based on an average particle diameter of 200 microns, wherein the number average molecular weight, $T_g$ and average particle diameter are measured as set forth in the description.

2. The powder composition of claim 1, wherein the oligomer has a number average molecular weight of less than 7,500 g/mol.

3. The powder composition of claim 1, wherein the oligomer has a number average molecular weight of less than 5,000 g/mol.

4. The powder composition of any one of the preceding claims, wherein the oligomer has a degree of polymerization of less than 100.

5. The powder composition of claim 4, wherein the oligomer has a degree of polymerization of less than 75.

6. The powder composition of any one of the preceding claims, wherein the at least one alkyl (meth)acrylate monomer comprise a monomer selected from ethyl (meth)acrylate, ethyl hexyl (meth)acrylate, and butyl (meth)acrylate.

7. The powder composition of claim any one of the preceding claims, wherein the chain transfer agent is selected from methyl 3-mercaptopropionate, butyl 3-mercaptopropionate, 2-ethyl hexyl thioglycollate, and pentaerythritol tetrakis(3-mercaptopropionate).

8. The powder composition according to any of claims 1-7, wherein the composition comprises the oligomer in an amount ranging from 1 to 98 wt% relative to the total weight of the oligomer and the multilayer polymer.

9. A resin composition comprising a resin selected from epoxy resin and methyl methacrylate resin, and the powder composition according to any one of claims 1 to 8.

10. The resin composition according to claim 9, wherein the resin composition comprises the oligomer in an amount ranging from 1 to 25 wt% relative to the total weight of the oligomer and the multilayer polymer.

11. A process for improving dispersion of a multilayer polymer in a resin composition, comprising adding a powder composition according to any one of claims 1 to 8 to a resin composition comprising a resin selected from epoxy resin and methyl methacrylate resin, wherein the dispersion of the multilayer polymer in the resin composition is improved relative to a similar resin composition that does not contain the oligomer.


**Patentansprüche**

1. Pulverzusammensetzung umfassend

 (i) ein mehrschichtiges Polymer, das ein Methacrylat-Butadien-Styrol-Kern-Schale-Polymer umfasst; und
 (ii) eine Zusammensetzung zur Dispergierung von Kern-Schale-Teilchen,

 wobei die Zusammensetzung zur Dispergierung von Kern-Schale-Teilchen Folgendes umfasst:
 ein Oligomer, hergestellt aus mindestens einem Alkyl(meth)acrylatmonomer in Gegenwart eines Kettenübertragungsmittels, wobei das Oligomer ein zahlenmittleres Molekulargewicht von weniger als 10.000 g/mol und eine Glasübergangstemperatur, $T_g$, gemessen durch dynamische Differenzkalorimetrie, aufweist, die niedriger als eine Koagulationstemperatur einer Zusammensetzung ist, die das Oligomer und ein mehrschichtiges Polymer umfasst, das ein Methacrylat-Butadien-Styrol-Kern-Schale-Polymer umfasst, wobei die Koagulationstemperatur auf einem mittleren Teilchendurchmesser von 200 Mikrometern basiert, wobei das zahlenmittlere Molekulargewicht, $T_g$, und der mittlere Teilchendurchmesser wie in der Beschreibung dargelegt gemessen werden.

2. Pulverzusammensetzung nach Anspruch 1, wobei das Oligomer ein zahlenmittleres Molekulargewicht von weniger als 7.500 g/Mol aufweist.

3. Pulverzusammensetzung nach Anspruch 1, wobei das Oligomer ein zahlenmittleres Molekulargewicht von weniger als 5.000 g/Mol aufweist.

4. Pulverzusammensetzung nach einem der vorstehenden Ansprüche, wobei das Oligomer einen Polymerisationsgrad von weniger als 100 aufweist.

5. Pulverzusammensetzung nach Anspruch 4, wobei das Oligomer einen Polymerisationsgrad von weniger als 75 aufweist.

6. Pulverzusammensetzung nach einem der vorstehenden Ansprüche, wobei das mindestens eine Alkyl(meth)acrylatmonomer ein Monomer umfasst, das ausgewählt ist aus Ethyl(meth)acrylat, Ethylhexyl(meth)acrylat und Butyl(meth)acrylat.

7. Pulverzusammensetzung nach einem der vorstehenden Ansprüche, wobei das Kettenübertragungsmittel ausgewählt ist aus Methyl-3-mercaptopropionat, Butyl-3-mercaptopropionat, 2-Ethylhexylthioglycolat und Pentaerythrittetrakis(3-mercaptopropionat).

8. Pulverzusammensetzung nach einem der Ansprüche 1 bis 7, wobei die Zusammensetzung das Oligomer in einer Menge im Bereich von 1 bis 98 Gew.-%, bezogen auf das Gesamtgewicht des Oligomers und des mehrschichtigen Polymers, umfasst.

9. Harzzusammensetzung, umfassend ein Harz, das ausgewählt ist aus Epoxidharz und Methylmethacrylatharz, und die Pulverzusammensetzung nach einem der Ansprüche 1 bis 8.

10. Harzzusammensetzung nach Anspruch 9, wobei die Harzzusammensetzung das Oligomer in einer Menge im Bereich von 1 bis 25 Gew.-%, bezogen auf das Gesamtgewicht des Oligomers und des mehrschichtigen Polymers, umfasst.

**11.** Verfahren zum Verbessern der Dispersion eines mehrschichtigen Polymers in einer Harzzusammensetzung, umfassend das Hinzufügen einer Pulverzusammensetzung nach einem der Ansprüche 1 bis 8 zu einer Harzzusammensetzung, die ein Harz umfasst, das aus Epoxidharz und Methylmethacrylatharz ausgewählt ist, wobei die Dispersion des mehrschichtigen Polymers in der Harzzusammensetzung im Vergleich zu einer ähnlichen Harzzusammensetzung, die das Oligomer nicht enthält, verbessert ist.

**Revendications**

**1.** Composition de poudre comprenant

(i) un polymère multicouche comprenant un polymère cœur-écorce de méthacrylate-butadiène-styrène ; et
(ii) une composition permettant de disperser des particules cœur-écorce,

ladite composition permettant de disperser des particules cœur-écorce comprenant :
un oligomère préparé à partir d'au moins un monomère de (méth)acrylate d'alkyle en présence d'un agent de transfert de chaîne, dans laquelle l'oligomère a une masse moléculaire moyenne en nombre inférieure à 10 000 g/mol et une température transition vitreuse, $T_g$, telle que mesurée par calorimétrie différentielle à balayage, inférieure à une température de coagulation d'une composition comprenant l'oligomère et un polymère multicouche comprenant un polymère cœur-écorce de méthacrylate-butadiène-styrène, dans laquelle la température de coagulation est basée sur un diamètre moyen de particules de 200 microns, dans laquelle la masse moléculaire moyenne en nombre, $T_g$ et le diamètre moyen de particules sont mesurés comme indiqué dans la description.

**2.** Composition de poudre selon la revendication 1, dans laquelle l'oligomère a une masse moléculaire moyenne en nombre inférieure à 7 500 g/mol.

**3.** Composition de poudre selon la revendication 1, dans laquelle l'oligomère a une masse moléculaire moyenne en nombre inférieure à 5 000 g/mol.

**4.** Composition de poudre selon l'une quelconque des revendications précédentes, dans laquelle l'oligomère a un degré de polymérisation inférieur à 100.

**5.** Composition de poudre selon la revendication 4, dans laquelle l'oligomère a un degré de polymérisation inférieur à 75.

**6.** Composition de poudre selon l'une quelconque des revendications précédentes, dans laquelle l'au moins un monomère de (méth)acrylate d'alkyle comprend un monomère choisi parmi (méth)acrylate d'éthyle, (méth)acrylate d'éthylhexyle, et (méth)acrylate de butyle.

**7.** Composition de poudre selon l'une quelconque des revendications précédentes, dans laquelle l'agent de transfert de chaîne est choisi parmi 3-mercaptopropionate de méthyle, 3-mercaptopropionate de butyle, thioglycolate de 2-éthylhexyle, et tétrakis(3-mercaptopropionate) de pentaérythritol.

**8.** Composition de poudre selon l'une quelconque des revendications 1 à 7, dans laquelle la composition comprend l'oligomère en une quantité allant de 1 à 98 % en poids par rapport au poids total de l'oligomère et du polymère multicouche.

**9.** Composition de résine comprenant une résine choisie parmi résine époxy et résine de méthacrylate de méthyle, et la composition de poudre selon l'une quelconque des revendications 1 à 8.

**10.** Composition de résine selon la revendication 9, dans laquelle la composition de résine comprend l'oligomère en une quantité allant de 1 à 25 % en poids par rapport au poids total de l'oligomère et du polymère multicouche.

**11.** Procédé d'amélioration de la dispersion d'un polymère multicouche dans une composition de résine, comprenant l'ajout d'une composition de poudre selon l'une quelconque des revendications 1 à 8 à une composition de résine comprenant une résine choisie parmi résine époxy et résine de méthacrylate de méthyle, dans lequel la dispersion du polymère multicouche dans la composition de résine est améliorée par rapport à une composition de résine similaire qui ne contient pas l'oligomère.

## REFERENCES CITED IN THE DESCRIPTION

**Patent documents cited in the description**

- WO 2017121749 A

- WO 2020197797 A1

**Non-patent literature cited in the description**

- Monomers, Oligomers, Polymers, and Macromolecules (Overview). **NAKA K.** Encyclopedia of Polymeric Nanomaterials. Springer, 2014

- Bulletin of the American Physical Society. 1956, vol. 1, 123
- Polymer Handbook. Interscience Publishers, 1966